# EUROPÄISCHE PATENTSCHRIFT

(11) **EP 0 492 329 B1**
(45) Veröffentlichungstag und Bekanntmachung des Hinweises auf die Patenterteilung: **15.09.1993**
(21) Anmeldenummer: 91121491.4
(22) Anmeldetag: 14.12.1991
(51) Int. Cl.: C02F 1/58, C02F 9/00

(54) **Verfahren zur Aufbereitung Schwefelwasserstoff, Cyanwasserstoff und Ammoniak enthaltender wässriger Lösungen**
Process for the treatment of hydrogen sulfide, hydrogen cyanide and ammonia containing aqueous solutions
Procédé pour le traitement de solutions aqueuses contenant de l'acide sulfhydrique, de l'acide cyanhydrique et de l'ammoniac

(30) Priorität: 22.12.1990 DE 4041569
(43) Veröffentlichungstag der Anmeldung: 01.07.1992
(73) Patentinhaber: HOECHST AKTIENGESELLSCHAFT, 65926 Frankfurt am Main (DE)
(72) Erfinder: Müller, Thomas, W-4220 Dinslaken (DE); Fischer, Rolf-Dieter, W-4200 Oberhausen (DE); Gerhardus, Ulrich, W-4200 Oberhausen (DE); Leder, Norbert, W-4200 Oberhausen (DE); Poloszyk, Klaus, W-4270 Dorsten (DE); Schneller, Peter, Dr., W-4200 Oberhausen (DE); Brunke, Wolfgang, W-4250 Bottrop (DE)

(56) Entgegenhaltungen:
- DE-A- 2 652 524
- LU-A- 78 504

## Beschreibung

Die Erfindung betrifft ein Verfahren zur Aufarbeitung von wäßrigen Lösungen, die Schwefelwasserstoff, Cyanwasserstoff und Ammoniak in gebundener oder freier Form enthalten.

Bei der Entgasung und der Vergasung von Kohle fallen Kondensate und Abwässer an, in denen größere Mengen umweltschädigende Verunreinigungen gelöst sind. Die wäßrigen Lösungen können daher nicht unmittelbar in konventionelle Reinigungsanlagen, in Flußläufe oder andere Vorfluter eingeleitet werden. Es ist vielmehr erforderlich, die in ihnen enthaltenen Schadstoffe vorher zu entfernen, wobei die strengen Auflagen des Gesetzgebers hinsichtlich maximaler Schadstoffkonzentrationen zu beachten sind.

Die in Lösung vorliegenden Verunreinigungen sind organischer und anorganischer Natur. Zu den organischen Stoffen zählen Phenole und andere sauerstoffhaltige Verbindungen wie Ketone, Aldehyde und Carbonsäuren, ferner stickstoffhaltige Verbindungen wie Pyridinderivate und Schwefelverbindungen. Als unerwünschte anorganischen Stoffe finden sich überwiegend Schwefelwasserstoff, Cyanwasserstoff und Ammoniak gelöst, die als solche oder in Form von Verbindungen vorliegen.

Es ist bekannt, in Abwässern gelöste organische Stoffe mit Lösungsmitteln zu extrahieren, die mit Wasser nicht oder nur in geringem Umfang mischbar sind. Die anorganischen Verunreinigungen werden vorzugsweise mit Wasserdampf oder inerten Gasen abgetrennt, eine Arbeitsweise, für die verschiedene Ausführungsformen entwickelt wurden.

So entfernt man nach der DE-AS 11 36 284 Schwefelwasserstoff und Cyanwasserstoff aus sauren Kokerei- oder ähnlichen Abwässern in einem zweistufigen Prozeß kontinuierlich durch Ausblasen mit praktisch inerten Gasen wie Luft.

In der DE 22 29 213 C2 wird ein Verfahren zur Aufarbeitung von Abwässern der Kohlevergasung oder Kohleentgasung beschrieben, das auf der Abtrennung von Kohlendioxid, Schwefelwasserstoff und Ammoniak aus der Lösung mittels Dampf beruht. Auf die Behandlung Cyanwasserstoff enthaltender Abwässer wird in dieser Veröffentlichung nicht eingegangen.

Die Entfernung von sauren Gasen, nämlich Kohlendioxid, Schwefeldioxid, Schwefelwasserstoff und Cyanwasserstoff und ihren Gemischen, sowie freiem und gebundenem Ammoniak aus verdünnten wäßrigen Lösungen ist Gegenstand der DE 26 52 524 C2. Das Verfahren besteht in einer zweistufigen, kontinuierlichen Destillation mit im Gegenstrom geführtem Abstreifdampf.

Die beschriebenen Verfahren führen zu einer deutlichen Verminderung der Schadstoffkonzentrationen in wäßrigen Lösungen, die die genannten Verunreinigungen enthalten, so daß die vorgegebenen Maximalwerte eingehalten werden können. Es zeigt sich aber, daß die momentan erzielten niedrigen Cyanidwerte im Gegensatz zu den Werten der anderen Verunreinigungen allmählich wieder ansteigen.

Speziell zur Entfernung von Cyaniden oder Cyanwasserstoff aus wäßrigen Lösungen wurden auch andere Wege als die der Destillation in ihren verschiedenen Varianten beschritten. Insbesondere chemische Verfahren haben sich für die Entgiftung cyanidhaltiger Abwässer bewährt. So behandelt man die Lösungen mit Hypochlorit, mit Peroxiverbindungen oder Ozon oder man hydrolysiert die Cyanide bei Temperaturen von 180 bis über 200°C unter Druck. Eines der ältesten chemischen Verfahren beruht auf der Umsetzung von Cyanid mit Eisen(II)-salzen im alkalischen Medium. Aber auch diese Verfahren führen nicht immer zum angestrebten Ziel oder sind aus wirtschaftlichen Gründen nur begrenzt anwendbar.

Der Erfindung liegt die Aufgabe zugrunde eine Arbeitsweise zu entwickeln, die die beschriebenen Mängel behebt und eine wirksame Abtrennung von Schwefelwasserstoff, Cyanwasserstoff und Ammoniak aus ihren Lösungen in Wasser ermöglicht.

Diese Aufgabe wird gelöst durch ein Verfahren zur Aufarbeitung Schwefelwasserstoff, Cyanwasserstoff und Ammoniak enthaltender wäßriger Lösungen durch Strippen mit inerten gasförmigen Medien bei erhöhter Temperatur. Es ist dadurch gekennzeichnet, daß man die wäßrigen Lösungen unmittelbar nach ihrer Entstehung auf einen pH-Wert von etwa 3 oder weniger einstellt und in einer ersten Abtreibekolonne Schwefelwasserstoff und Cyanwasserstoff entfernt, darauf den pH-Wert auf etwa 10 oder mehr erhöht und in einer zweiten Abtreibekolonne Ammoniak abtrennt.

Überraschenderweise gelingt es mit Hilfe der erfindungsgemäßen Maßnahmen, die genannten Verunreinigungen aus ihren Lösungen in Wasser soweit zu entfernen, daß die resultierende wäßrige Phase in konventionelle Reinigungsanlagen oder in Vorfluter eingeleitet werden kann. Besonders bemerkenswert ist, daß in der behandelten Wasserphase ein Anstieg der Cyanidkonzentration nicht beobachtet wird. Möglicherweise verhindert das erfindungsgemäße Verfahren die partielle Umsetzung von Cyanid und Sulfid zu Rhodanid, das in der Lösung verbleibt und im Laufe der Zeit wieder Cyanid abspaltet. Es muß jedoch betont werden, daß diese Erklärung lediglich eine Hypothese darstellt, Versuche zu ihrer Bestätigung wurden nicht durchgeführt.

Nach dem erfindungsgemäßen Verfahren können Schwefelwasserstoff, Cyanwasserstoff und Ammoniak enthaltende wäßrige Lösungen, gleich welcher Herkunft, behandelt werden. Entsprechend ihrer Bedeutung wird es aber insbesondere bei der Aufarbeitung von Abwässern eingesetzt, die bei der Entgasung von Kohle oder bei der Vergasung fossiler Brennstoffe, wie Steinkohle oder Erdöl, anfallen.

Vor der Abtrennung der anorganischen Verbindungen empfiehlt es sich, in den Lösungen gegebenenfalls enthaltene Feststoffe wie Ruß z.B. durch Filtration oder Sedimentieren und organische Verbindungen z.B. durch Extraktion mit einem Lösungsmittel, das sich mit Wasser nicht mischt, abzutrennen.

Bei der praktischen Durchführung des neuen Prozesses werden die wäßrigen Lösungen in zwei getrennten, aufeinanderfolgenden Stufen destilliert. Es ist ein sehr wesentliches Merkmal der Erfindung, daß die wäßrigen Lösungen in der ersten Stufe stark angesäuert, d.h. auf einen pH-Wert von etwa 3 oder weniger eingestellt werden. Da die Lösungen üblicherweise schwach sauer, neutral oder alkalisch sind, setzt man ihnen entsprechende Mengen einer Säure zu. Geeignet sind starke anorganische Säuren, bevorzugt werden Schwefelsäure oder Salpetersäure. Es hat sich besonders bewährt, die Säure in einem sehr frühen Stadium den Lösungen zuzusetzen, zweckmäßig unmittelbar nach ihrer Entstehung, d.h. ohne Zwischenlagerung. Dadurch wird sichergestellt, daß die kritischen Lösungsbestandteile Sulfid und Cyanid nicht zu Verbindungen reagieren, die durch Strippen nicht abgetrennt werden können. Es versteht sich von selbst, daß durch die Säurezugabe Cyanide und Sulfide in die entsprechenden Wasserstoffverbindungen umgewandelt werden.

Die Abtrennung der in den stark sauren Lösungen enthaltenen gasförmigen Verbindungen Schwefelwasserstoff und Cyanwasserstoff erfolgt durch Strippen in einer Abtreibekolonne mit einem unter den gewählten Arbeitsbedingungen inerten oder zumindest weitgehend inerten gasförmigen Medium, das in den Kolonnensumpf eingeblasen wird. Als inerte gasförmige Medien haben sich Luft und insbesondere Wasserdampf bewährt. Der Wasserdampf wird vorzugsweise durch Eindampfen eines Teils der wäßrigen Lösung erzeugt, um die gesamte Abwassermenge nicht zu erhöhen. Die Destillation erfolgt bei Temperaturen zwischen etwa 60 und 150°C, insbesondere 80 bis 120°C und bei Drücken von 0,02 bis 0,5 MPa, vorzugsweise 0,05 bis 0,12 MPa. Während der Destillation ist dafür Sorge zu tragen, daß der pH-Wert der Lösung aufrechterhalten wird, zumindest aber nicht ansteigt. Die Menge des Strippgases richtet sich nach der Konzentration der Verunreinigungen in der wäßrigen Lösung und der zu behandelnden Lösungsmenge und ist so zu bemessen, daß die im gereinigten Abwasser enthaltenen Restmengen Cyanwasserstoff und Schwefelwasserstoff tolerierbar sind. Je nach den vorgegebenen Betriebsbedingungen und den vorliegenden Stoffmengen kann man sowohl Füllkörperals auch Bodenkolonnen, beispielsweise Glockensieb- oder Ventilbodenkolonnen, einsetzen. Einen wesentlichen Einfluß auf das Strippergebnis hat die Bodenzahl der Trennkolonne. Es wurde gefunden, daß besonders gute Trennergebnisse erzielt werden, wenn die Kolonne 1 bis 30, insbesondere 6 bis 12 theoretische Böden aufweist. Das Kopfprodukt der Abtreibekolonne wird vollständig oder teilweise kondensiert und auf den Kopf der Kolonne zurückgeführt, die gasförmigen Bestandteile des Gemisches werden nach außen abgeleitet.

Das Sumpfprodukt der ersten Abtreibekolonne wird durch Zusatz alkalisch reagierender Stoffe auf einen pH-Wert von mindestens 10 eingestellt. Als alkalische Reagenzien können Alkalihydroxide, insbesondere Natriumhydroxid und vorzugsweise Calciumoxid oder -hydroxid verwendet werden. In einer zweiten Abtreibekolonne wird die alkalische Lösung wiederum mit einem unter den Arbeitsbedingungen inerten oder nahezu inerten Gas als Strippmedium destilliert. Als inerte Gase werden wiederum mit Erfolg Luft und insbesondere Wasserdampf, der vorzugsweise aus dem Abwasser gewonnen wurde, eingesetzt. Die Destillationstemperaturen liegen zwischen etwa 60 und etwa 150°C, bevorzugt werden 80 bis 120°C, der Druck beträgt 0,02 bis 0,5 MPa, insbesondere 0,05 bis 0,12 MPa. Wie in der ersten Stufe hängt die Menge des Strippgases von der Konzentration der Verunreinigung, also des Ammoniaks im Abwasser und der Abwassermenge ab. Für die Destillation eignen sich auch in diesem Verfahrensschritt Füllkörper- oder Bodenkolonnen. Die Trennwirkung ist besonders günstig bei Verwendung von Kolonnen mit 5 bis 50, insbesondere 6 bis 20 theoretischen Böden. Wie in der ersten Destillationsstufe wird das Kopfprodukt ganz oder teilweise kondensiert. Das Kondensat wird auf den Kopf der Kolonne zurückgeführt, der gasförmige Anteil, Ammoniak, nach außen abgeleitet.

Die abgetrennten, gasförmigen Stoffströme, Schwefelwasserstoff und Cyanwasserstoff aus der ersten Stufe, Ammoniak aus der zweiten Stufe, werden in bekannter Weise, z.B. durch Absorption oder Verbrennung weiterverarbeitet. Nach einer bevorzugten Ausführungsform des erfindungsgemäßen Prozesses führt man die Verbrennung katalytisch, z.B. in einer Claus-Anlage durch.

Die nach der neuen Arbeitsweise behandelten Lösungen enthalten weniger als 1 mg H₂S und weniger als 5 mg leicht freisetzbares HCN (d.h. HCN aus Cyaniden) jeweils je l Abwasser und maximal 10 mg NH₃/l. Sie können daher, ohne weitere Vorkehrungen, in übliche Reinigungsanlagen und auch in Flußläufe eingeleitet werden.

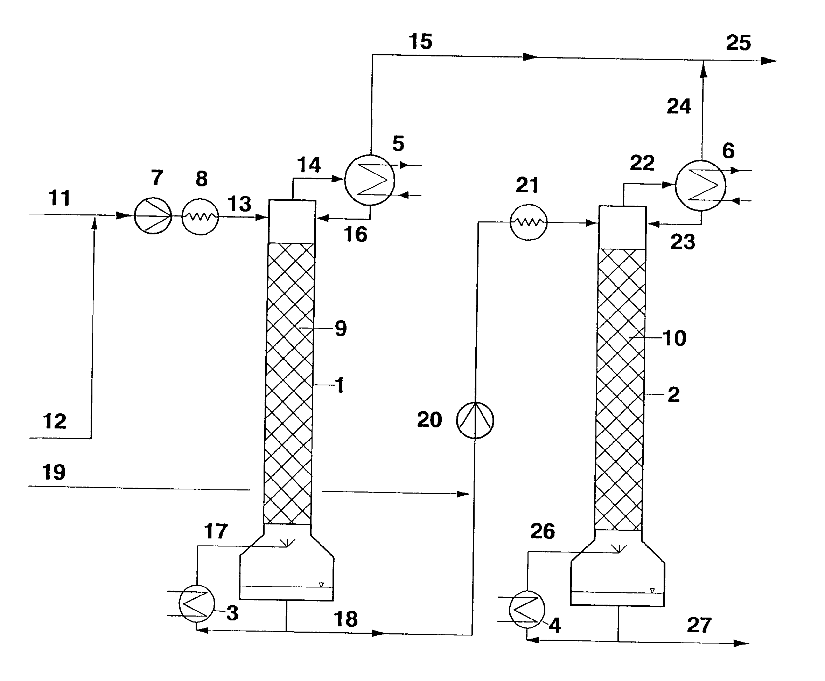

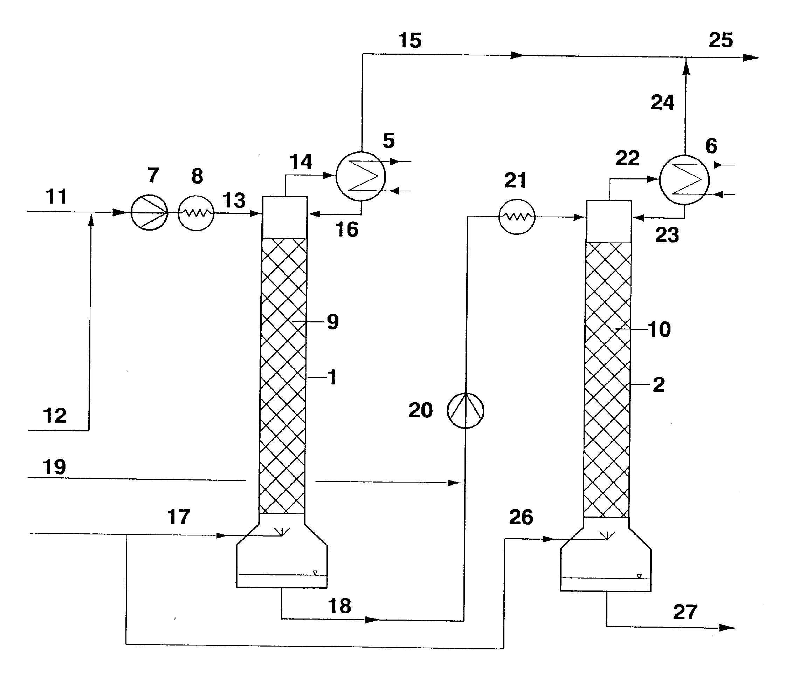

In den Abbildungen 1 und 2 sind beispielhaft zwei Ausführungsformen des erfindungsgemäßen Verfahrens dargestellt.

In der Ausführungsform gemäß Abbildung 1 erfolgt die Abtrennung der gelösten gasförmigen Verbindungen durch Strippen mit Dampf, in der Ausführungsform gemäß Abbildung 2 mit Hilfe eines anderen inerten gasförmigen Mediums, z.B. Luft.

Die Anlage besteht in beiden Fällen im wesentlichen aus Abtreibekolonnen 1 und 2.

Belastetes Abwasser wird durch Zugabe eines sauren Reagenz über eine Leitung 12 auf einen pH-Wert von 3 oder weniger eingestellt und mittels einer Pumpe 7 über eine Leitung 11 in einem Vorwärmer 8 annähernd auf Siedetemperatur erhitzt und weiter über eine Leitung 13 am Kopf 14 der Kolonne 1 aufgegeben. Von Kopf 14 strömt das Abwasser über Kolonneneinbauten 9 zum Kolonnensumpf. Ein Teil des Wassers wird in einem Aufheizer 3 verdampft. Der Dampf wird über eine Leitung 17 im Gegenstrom zum Abwasser dem Kolonnenkopf 14 und weiter einem Kondensator 5 zugeleitet. Der im Gegenstrom geführte Dampf entfernt die im Abwasser gelösten Verunreinigungen Schwefelwasserstoff und Cyanwasserstoff. Im Kondensator 5 werden Wasserdampf, er wird auskondensiert, und die Gase, sie entweichen als Kopfprodukt über eine Leitung 15, voneinander getrennt. Das Dampfkondensat wird über eine Leitung 16 auf den Kopf 14 der Kolonne zurückgeführt.

Das im wesentlichen mit Ammoniak und restlichen Cyaniden belastete Abwasser wird am Sumpf der Kolonne 1 über eine Leitung 18 abgezogen und durch Zugabe eines alkalischen Reagenz über eine Leitung 19 auf einen pH-Wert von 10 oder höher eingestellt. Mit Hilfe einer Pumpe 20 wird das Abwasser in einen Aufheizer 21 gefördert, dort erneut annähernd auf Siedetemperatur erhitzt und am Kopf 22 der Kolonne 2 aufgegeben. Die Kolonne 2 wird entsprechend der Kolonne 1 betrieben. Dem abwärts über Kolonneneinbauten 10 fließenden Wasser führt man Dampf, der durch indirekte Beheizung eines Teils des Abwassers in einem Aufheizer 4 erzeugt wurde, über eine Leitung 26 entgegen. Dabei wird im Abwasser gelöstes Ammoniak und ein weiterer Anteil der Cyanide abgestreift. Das Gemisch aus Ammoniak und Wasserdampf wird in einem Kondensator 6 in der Weise gekühlt, daß nur Wasserdampf auskondensiert. Er wird über eine Leitung 23 auf den Kopf 22 der Kolonne 2 zurückgeführt. Ammoniak führt man über eine Leitung 24 einer Abgassammelleitung 25 zu, über die es zusammen mit Schwefelwasserstoff und Cyanwasserstoff in die Abgasaufbereitung, z.B. eine Claus-Anlage, gelangt.

Das gereinigte Abwasser wird am Sumpf der Kolonne 2 über eine Leitung 27 abgezogen und kann ohne weitere Vorkehrungen in übliche Reinigungsanlagen und auch in Flußläufe eingeleitet werden.

Der Arbeitsdruck in den Kolonnen 1 und 2 und damit die Siedetemperatur lassen sich in weiten Grenzen verändern. Daher ist es möglich, zur besseren Nutzung der Energie, die Kolonne 2 bei niedrigerem Druck zu betreiben als Kolonne 1. Die Kondensationswärme des Wasserdampfs der Kolonne 1 läßt sich dann zur indirekten Aufheizung des Sumpfes der Kolonne 2 verwenden, indem man Kondensator 5 und Aufheizer 4 zu einem Wärmeaustauscher zusammenfaßt.

In der Ausführungsform des erfindungsgemäßen Verfahrens gemäß Abbildung 2 verwendet man zum Austreiben von Ammoniak, Schwefelwasserstoff und Cyanwasserstoff nicht Wasserdampf, der durch Verdampfen eines Teils des Abwassers gewonnen wurde, sondern ein anderes gasförmiges Medium, z.B. Luft, das über die Leitungen 17 bzw. 26 in die Kolonnen 1 bzw. 2 strömt.

Nachfolgend wird das neue Verfahren durch Beispiele erläutert, jedoch nicht auf die beschriebenen Ausführungsformen beschränkt.

### Beispiel 1

In eine Anlage nach Abbildung 1 werden 4,3 m³ Abwasser/h, das je Liter 117 mg NH₃, 211 mg H₂S und 503 mg HCN in Form von Salzen enthält, und dessen pH-Wert 5,9 beträgt, eingeleitet. Durch Zugabe von 240 g H₂SO₄ (100 Gew.-%ig) je m³ Abwasser stellt man einen pH-Wert von 3 ein. Das Abwasser wird im Vorwärmer 8 auf 95°C erhitzt und am Kopf 14 der Kolonne 1 aufgegeben. Im Sumpf der Kolonne 1 werden etwa 10 Gew.-% des Abwassers im Aufheizer 3 verdampft. Der Wasserdampf wird im Gegenstrom zum Abwasser dem Kopf 14 der Kolonne 1, die bei 0,1 MPa betrieben wird, zugeleitet. Zur Kondensation des Wasserdampfs kühlt man das Kopfprodukt im Kondensator 5 auf etwa 85°C ab. Der Wasserdampf wird auf den Kopf 14 der Kolonne 1 zurückgeführt, die gasförmigen Bestandteile des Kondensats werden der Abgasaufbereitung zugeführt. Das Sumpfprodukt der Kolonne 1 enthält noch etwa 0,2 mg H₂S/l und etwa 7 mg HCN/l, sowie die Gesamtmenge NH₃ in Form von Salzen. Durch Zugabe von 340 g NaOH je m³ Sumpfprodukt der Kolonne 1 wird dessen pH-Wert auf 10 erhöht. Man erhitzt das Abwasser im Aufheizer 21 auf etwa 95°C und führt es dem Kopf der Kolonne 2, die wie Kolonne 1 bei einem Druck von 0,1 MPa arbeitet, zu. Im Aufheizer 4 werden etwa 10 Gew.-% des Sumpfproduktes der Kolonne 1 verdampft und der Wasserphase von Kopf 22 der Kolonne 2 entgegengeleitet. Das am Kolonnenkopf 22 erhaltene Produkt wird im Kondensator 6 auf 85°C abgekühlt, um den Wasseranteil auszukondensieren, der über Leitung 23 auf den Kopf 22 der Kolonne 2 zurückgeführt wird. Der gasförmige Anteil des Kondensats, im wesentlichen Ammoniak, wird zusammen mit dem Abgas der Kolonne 1 der Abgasaufbereitung zugeführt. Im Sumpf der Kolonne 2 fallen 4,3 m³ Abwasser/h an, das je l noch 4,1 mg NH₃, 0,2 mg H₂S und 3,3 mg HCN in Form von Salzen enthält.

### Beispiel 2

Beispiel 1 wird mit einem Abwasser wiederholt, das je Liter 328 mg NH₃, 160 mg H₂S und 423 mg HCN in Form von Salzen enthält. Durch Zusatz von 97 g H₂SO₄ (100 Gew.-%ig) je m³ Abwasser wird der pH-Wert auf 3 eingestellt. Das nach Behandlung des Abwassers wie in Beispiel 1 beschrieben, im Sumpf der Kolonne 1 anfallende Produkt enthält je Liter noch etwa 0,2 mg H₂S, 4,0 mg HCN sowie die Gesamtmenge NH₃ als Salze. Das Sumpfprodukt wird mit 1030 g NaOH/m³ versetzt, so daß sich ein pH-Wert von 11 einstellt. Man verfährt weiter wie in Beispiel 1 beschrieben. Im Sumpf der Kolonne 2 erhält man je Stunde 4,3 m³ Abwasser mit 3,0 mg NH₃, 0,6 mg H₂S und 1,9 mg HCN als Salze im Liter.

## Patentansprüche

1. Verfahren zur Aufarbeitung Schwefelwasserstoff, Cyanwasserstoff und Ammoniak enthaltender wäßriger Lösungen durch Strippen mit inerten gasförmigen Medien bei erhöhter Temperatur dadurch gekennzeichnet, daß man die wäßrigen Lösungen unmittelbar nach ihrer Entstehung auf einen pH-Wert von etwa 3 oder weniger einstellt und in einer ersten Abtreibekolonne Schwefelwasserstoff und Cyanwasserstoff entfernt, darauf den pH-Wert auf etwa 10 oder mehr erhöht und in einer zweiten Abtreibekolonne Ammoniak abtrennt.

2. Verfahren nach Anspruch 1, dadurch gekennzeichnet, daß der pH-Wert von etwa 3 oder weniger mit Schwefelsäure oder Salpetersäure, der pH-Wert von etwa 10 oder mehr mit Natriumhydroxid oder Calciumoxid oder -hydroxid eingestellt wird.

3. Verfahren nach Anspruch 1 oder 2, dadurch gekennzeichnet, daß die Entfernung von Schwefelwasserstoff und Cyanwasserstoff in der ersten Abtreibekolonne und die Entfernung von Ammoniak in der zweiten Abtreibekolonne durch Strippen mit Luft oder vorzugsweise mit Dampf als gasförmiges Medium erfolgt.

4. Verfahren nach Anspruch 3, dadurch gekennzeichnet, daß der Dampf aus der aufzuarbeitenden Lösung gewonnen wird.

5. Verfahren nach einem oder mehreren der Ansprüche 1 bis 4, dadurch gekennzeichnet, daß die Behandlung der wäßrigen Lösung sowohl in der ersten als auch in der zweiten Abtreibekolonne bei etwa 60 bis 150°C, vorzugsweise 80 bis 120°C und bei Drücken von 0,02 bis 0,5 MPa, vorzugsweise 0,05 bis 0,12 MPa erfolgt.

6. Verfahren nach einem oder mehreren der Ansprüche 1 bis 5, dadurch gekennzeichnet, daß die erste Abtreibekolonne 1 bis 30, vorzugweise 6 bis 12 theoretische Böden aufweist.

7. Verfahren nach einem oder mehreren der Ansprüche 1 bis 5, dadurch gekennzeichnet, daß die zweite Abtreibekolonne 5 bis 50, vorzugsweise 6 bis 20 theoretische Böden aufweist.

8. Verfahren nach einem oder mehreren der Ansprüche 1 bis 7, dadurch gekennzeichnet, daß das Kopfprodukt der ersten und/oder der zweiten Abtreibekolonne kondensiert und auf den Kopf der jeweiligen Kolonne zurückgeführt wird.

9. Verfahren nach einem oder mehreren der Ansprüche 1 bis 8, dadurch gekennzeichnet, daß die abgetrennten, Schwefelwasserstoff, Cyanwasserstoff und Ammoniak enthaltenden Stoffströme katalytisch verbrannt werden.

## Claims

1. A process for working up an aqueous solution containing hydrogen sulfide, hydrogen cyanide and ammonia by stripping with an inert gaseous medium at elevated temperature, which comprises bringing the aqueous solution to a pH of about 3 or less immediately after its formation, removing the hydrogen sulfide and hydrogen cyanide in a first stripping column, subsequently increasing the pH to about 10 or more and removing the ammonia in a second stripping column.

2. The process as claimed in claim 1, wherein the pH of about 3 or less is established with sulfuric acid or nitric acid and the pH of about 10 or more is established with sodium hydroxide or calcium oxide or hydroxide.

3. The process as claimed in claim 1 or 2, wherein the removal of hydrogen sulfide and hydrogen cyanide in the first stripping column and the removal of ammonia in the second stripping column is carried out by stripping with air or, preferably, with steam as the gaseous medium.

4. The process as claimed in claim 3, wherein the steam is obtained from the solution to be worked up.

5. The process as claimed in one or more of claims 1 to 4, wherein the treatment of the aqueous solution both in the first and in the second stripping column is carried out at about 60 to 150°C, preferably 80 to 120°C, and under pressures of 0.02 to 0.5 MPa, preferably 0.05 to 0.12 MPa.

6. The process as claimed in one or more of claims 1 to 5, wherein the first stripping column has 1 to 30, preferably 6 to 12, theoretical plates.

7. The process as claimed in one or more of claims 1 to 5, wherein the second stripping column has 5 to 50, preferably 6 to 20, theoretical plates.

8. The process as claimed in one or more of claims 1 to 7, wherein the top product of the first and/or of the second stripping column is condensed and recycled to the top of the respective column.

9. The process as claimed in one or more of claims 1 to 8, wherein the substance streams removed which contain hydrogen sulfide, hydrogen cyanide and ammonia are burned catalytically.

## Revendications

1. Procédé pour le traitement de solutions aqueuses contenant de l'acide sulfhydrique, de l'acide cyanhydrique et de l'ammoniac par stripage par des agents gazeux inertes à température élevée, caractérisé en ce que l'on ajuste les solutions aqueuses à un pH d'environ 3 ou moins aussitôt après leur formation et on élimine l'acide sulfhydrique et l'acide cyanhydrique dans une première colonne de stripage, ensuite on élève le pH à environ 10 ou plus et on sépare l'ammoniac dans une seconde colonne de stripage.

2. Procédé selon la revendication 1, caractérisé en ce que le pH d'environ 3 ou moins est réglé par l'acide sulfurique ou l'acide nitrique, le pH d'environ 10 ou plus par l'hydroxyde de sodium ou l'oxyde ou l'hydroxyde de calcium.

3. Procédé selon la revendication 1 ou 2, caractérisé en ce que l'élimination de l'acide sulfhydrique et de l'acide cyanhydrique dans la première colonne de stripage et l'élimination de l'ammoniac dans la seconde colonne de stripage s'effectuent par stripage par l'air ou de préférence par la vapeur comme agent gazeux.

4. Procédé selon la revendication 3, caractérisé en ce que la vapeur est obtenue à partir de la solution à traiter.

5. Procédé selon une ou plusieurs des revendications 1 à 4, caractérisé en ce que le traitement de la solution aqueuse, aussi bien dans la première que dans la seconde colonne de stripage, s'effectue à environ 60 à 150°C, de préférence 80 à 120°C et sous des pressions de 0,02 à 0,5 mPa de préférence de 0,05 à 0,12 mPa.

6. Procédé selon une ou plusieurs des revendications 1 à 5, caractérisé en ce que la première colonne de stripage possède 1 à 30 plateaux théoriques, de préférence 6 à 12.

7. Procédé selon une ou plusieurs des revendications 1 à 5, caractérisé en ce que la seconde colonne de stripage possède 5 à 50 plateaux théoriques, de préférence 6 à 20.

8. Procédé selon une ou plusieurs des revendications 1 à 7, caractérisé en ce que le produit de tête de la première et/ou de la seconde colonne de stripage est condensé et recyclé chaque fois en tête de la colonne respective.

9. Procédé selon une ou plusieurs des revendications 1 à 8, caractérisé en ce que les courants de substances séparés contenant l'acide sulfhydrique, l'acide cyanhydrique et l'ammoniac sont brûlés catalytiquement.
